# FASCICULE DE BREVET EUROPEEN

(11) **EP 1 799 531 B1**
(45) Date de publication et mention de la délivrance du brevet: **13.01.2010**
(21) Numéro de dépôt: 05792046.4
(22) Date de dépôt: 25.07.2005
(51) Int. Cl.: B62D 25/10, B60R 21/34

(54) **CAPOT DE VEHICULE AUTOMOBILE POURVU D'UNE DOUBLURE RENFORCEE**
KRAFTFAHRZEUG-MOTORHAUBE MIT VERSTÄRKTER AUSKLEIDUNG
MOTOR VEHICLE HOOD PROVIDED WITH A REINFORCED LINING

(30) Priorité: 24.09.2004 FR 0410127
(43) Date de publication de la demande: 27.06.2007
(73) Titulaire: RENAULT S.A.S., 92100 Boulogne Billancourt (FR)
(72) Inventeur: TETU, Yvon, F-92250 LA GARENNE COLOMBES (FR); TOURBIER, Yves, F-92500 RUEIL MALMAISON (FR); ZANOLIN, Dominique, F-78150 LE CHESNAY (FR)
(74) Mandataire: Guyon, Rodolphe C.
(86) Numéro de dépôt international: PCT/FR2005/050614
(87) Numéro de publication internationale: WO 2006/032800

(56) Documents cités:
- EP-A- 0 992 418
- EP-A- 1 093 980
- EP-A- 1 493 639
- DE-A1- 10 224 423
- PATENT ABSTRACTS OF JAPAN vol. 2003, no. 12, 5 décembre 2003 (2003-12-05) & JP 2004 136810 A (TOYOTA MOTOR CORP), 13 mai 2004 (2004-05-13)

## Description

L'invention concerne un capot de véhicule automobile pourvu d'une doublure renforcée.

Les capots de véhicule automobile sont généralement formés d'une peau formant le côté visible du capot, et d'un renfort, appelé doublure, placé du côté invisible du capot. Afin de conférer au capot une tenue géométrique et de la raideur statique, la doublure et la peau sont collées et/ou serties sur la périphérie du capot, et des plots de calage, généralement en mastic de faible résistance, assurent une liaison entre la peau et la doublure sur le reste de la surface du capot.

Le capot, et plus particulièrement la doublure, sont également conçus de manière à amortir le choc subi par la tête d'un piéton. A cet effet, le Comité Européen pour l'Amélioration de la Sécurité des Véhicules définit pour les capots automobiles une valeur HIC (Head Injury Criterium, Critère de blessure à la tête) qui doit être inférieure ou égale à 2000 environ sur un tiers de la surface de frappe, et inférieure ou égale à 1000 environ sur les deux tiers de la surface de frappe, tel que défini par la réglementation.

Afin d'améliorer la sécurité des capots de véhicules automobiles pour les piétons, les constructeurs cherchent donc à réduire la valeur HIC.

A cet effet, le document EP-1 357 018 propose un capot dont la doublure présente une section de forme ondulée, dont les ondulations courbes, sont parallèles entre elles et s'étendent sur l'ensemble de la surface de la doublure. Ces ondulations de la doublure permettent d'augmenter la rigidité du capot, réduisant ainsi la valeur HIC. Cette structure permet également de réduire la décélération de la tête en cas d'impact. Ce document indique qu'une telle structure permet de réduire la valeur HIC malgré une courte descente de la tête en cas d'impact. Toutefois, la forme ondulée de la doublure entraîne une déformation de l'ensemble du capot lors d'un impact, engendrant une décélération suffisante mais très lente. Cette décélération très lente va influer sur la course de descente du capot d'une manière telle qu'il existe un risque non négligeable de contact entre la doublure et un élément du compartiment moteur. Un tel contact provoque une décélération brusque de la tête non souhaitable car elle entraîne une aggravation des dommages corporels.

On connaît encore par EP 0 992 418 (Volkswagen Aktiengeselleschaft) un capot de véhicule automobile formé d'une peau et d'une doublure et présentant des parois latérales sensiblement planes entre les surfaces de cavités et de fond. Néanmoins, la doublure est pourvue de reliefs fermés à leur base, ce qui limite la capacité de déformation et donc l'absorption de choc du capot.

L'invention vise à pallier ces inconvénients en proposant un capot dont la structure de la doublure permet de limiter la déformation du capot à la zone ayant subi l'impact de manière à réduire la descente du capot et/ou de la doublure.

A cet effet, l'invention concerne un capot de véhicule conforme à la revendicaion 1.

La section transversale de la doublure est alors formée par des segments de droite et non par une courbe comme dans le document EP-1 357 018, de sorte que, d'une part, l'onde de choc d'un impact est peu ou pas diffusée aux cavités voisines et reste localisée essentiellement au niveau de la cavité recevant l'impact, et d'autre part, la cavité présente une rigidité supérieure par rapport à une cavité de section courbe. En cas d'impact, la forme de ces cavités, en conférant une raideur dès le début de l'impact, limite la descente du capot tout en maintenant une décélération correcte de la tête. Les risques de contact entre le capot et un élément du compartiment moteur sont ainsi réduits. De plus, la présence de ces cavités sur toute la surface du capot permet d'obtenir un comportement homogène du capot.

De préférence, chaque relief est formé d'une surface sensiblement plane reliant les parois latérales adjacentes des deux cavités voisines.

Avantageusement, l'angle entre la paroi de fond et chaque paroi de latérale, ainsi que les dimensions de chaque cavité, sont déterminés de sorte que le critère HIC du capot respecte la valeur normalisée pour un type d'impact, et en ce que, lors de cet impact, la descente du capot, et/ou de la doublure, soit minimale. Les critères HIC et descente de capot sont ainsi optimisés simultanément. L'invention permet ainsi d'obtenir un capot pour lequel la valeur HIC et la course de descente en cas d'impact avec un piéton sont optimisées.

Avantageusement, l'angle entre la paroi de fond et chaque paroi latérale de chaque cavité de la doublure est supérieur ou égal à environ 90°.

Avantageusement, les cavités de la doublure sont orientées de manière à ce que leur plus grande longueur soit sensiblement parallèle à la direction longitudinale du véhicule auquel est destiné le capot. Les cavités présentent ainsi une longueur plus faible, ce qui permet d'améliorer leur raideur.

L'invention est maintenant décrite en référence aux dessins annexés, non limitatifs, dans lesquels :
- la figure 1 est une vue en perspective éclatée d'un capot selon l'invention ;
- la figure 2 est une vue en coupe transversale schématisée de la doublure du capot suivant la ligne A-A de la figure 1,
- la figure 3 est un agrandissement d'une vue en coupe d'une cavité et d'un relief de la doublure.

Sur les figures, les directions X, Y, Z représentent respectivement les directions longitudinale, transversale et verticale d'un véhicule, la direction longitudinale étant dirigée vers l'arrière du véhicule. Les différents éléments du capot sont représentés suivant une orientation correspondant à la position montée du capot sur le véhicule.

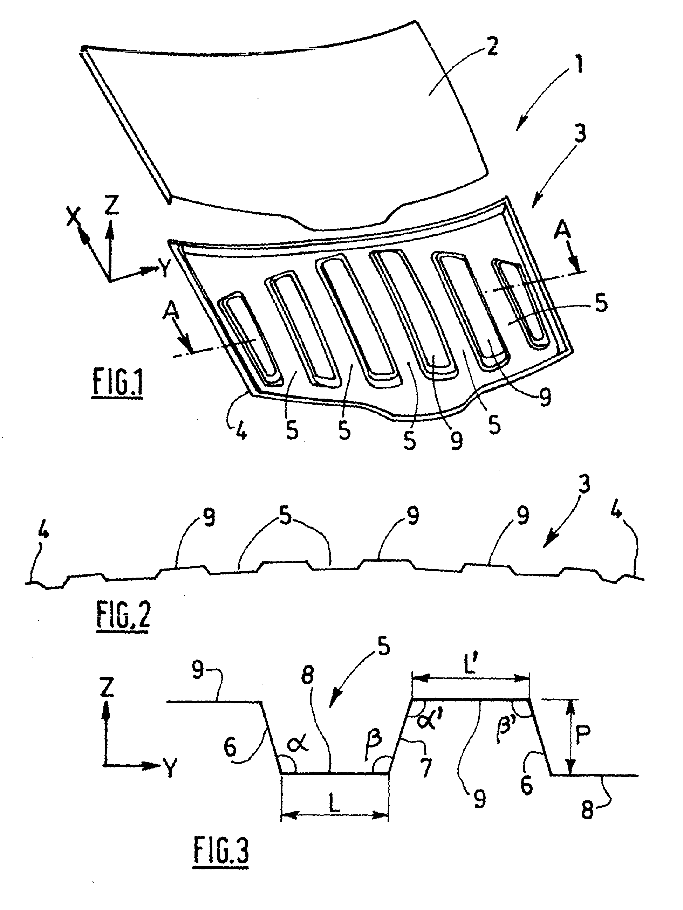

La figure 1 représente un capot 1 de véhicule automobile formé d'une peau 2, formant la partie externe du capot, et d'une doublure 3. La doublure 3 est assemblée de manière connue à la face interne de la peau le long de son bord 4. Des plots de calage (non représentés) peuvent en outre être placés entre la doublure et la peau de manière connue.

La doublure 3 se présente sous la forme d'une plaque de faible épaisseur sensiblement plane et de mêmes dimensions que le capot. La doublure présente, sur sensiblement toute sa surface, une pluralité de cavités 5 allongées dont la longueur s'étend sensiblement parallèlement à la direction longitudinale X du capot.

Chaque cavité 5 est formée de deux parois latérales longitudinales planes 6 et 7, et d'une paroi de fond également plane 8. La section de la doublure est ainsi similaire à une sorte de fonction carrée, tel que visible sur la figure 2. Les cavités 5 sont séparées par des surfaces 9 formant des reliefs, également allongées dont la longueur s'étend sensiblement parallèlement à la direction longitudinale X du capot. Dans l'exemple, les surfaces de ces reliefs 9 sont sensiblement planes et s'étendent sensiblement dans le même plan que le bord 4 de la doublure (figure 2).

Dans l'exemple, la doublure est formée par emboutissage d'une plaque de tôle. La doublure peut toutefois être réalisée au moyen d'une autre technique appropriée en fonction de son matériau.

Dans la description qui va suivre, des caractéristiques géométriques relatives aux cavités 5 vont être abordées. Il sera compris que, par complémentarité, ces caractéristiques s'appliquent également aux reliefs 9 (figure 3).

On définit pour chaque cavité 5 : α et β, les angles entre la paroi de fond 8 et une paroi longitudinale 6, et entre la paroi de fond 8 et l'autre paroi longitudinale 7, respectivement ; L, la largeur de la paroi de fond dans une direction transversale perpendiculaire à la longueur de la cavité ; et P, la profondeur de la cavité dans la direction verticale (figure 3). Les angles α et β peuvent être identiques ou non en fonction de la position de la cavité par rapport à la doublure et de la rigidité souhaitée de la cavité.

De manière similaire, on définit par α' et β', les angles entre la surface du relief 9 et les parois latérales adjacentes des cavités. Pour au moins un relief 9, ces angles (α', β') peuvent être identiques aux angles (α, β) d'au moins une cavité, ou différents de ces angles. On définit également par L', la largeur de la surface du relief 9.

Pour chaque cavité, les angles α et β, et les valeurs L et P, sont adaptés à la rigidité désirée de la zone correspondante du capot, et plus particulièrement au critère HIC et à la descente de capot désirés.

Les dimensions et la forme de chaque cavité sont de préférence déterminées de manière à respecter en cas d'impact des valeurs de HIC cibles et à minimiser la descente du capot, et/ou de la doublure, suivant la direction verticale Z provoquée par un impact.

A cet effet, on réalise des doublures dont les cavités présentent différentes valeurs α et β, L et P, puis les capots assemblés sont testés de manière à mesurer au moyen de capteurs appropriés les vitesses de descente du capot lors d'un impact, ainsi que la distance de descente du capot (et/ou de la doublure) engendrée par l'impact. Pour une valeur de HIC cible, on cherche ainsi les valeurs α et β, L et P optimales pour minimiser la descente de capot, et/ou de la doublure, en différents points du capot.

Par exemple, dans les zones latérales du capot, un HIC inférieur ou égal à 2000 est souhaitable, tandis que dans la zone centrale du capot un HIC inférieur ou égal à 1000 est souhaitable. Dans chaque zone, pour une valeur HIC choisie, on détermine ainsi par des essais et des calculs, les valeurs α et β, L et P correspondant à une descente minimale du capot et/ou de la doublure.

Ainsi, afin d'augmenter la rigidité d'une cavité, on cherchera à rapprocher les angles α et β de la valeur de 90°, et/ou à diminuer la largeur L, et/ou à augmenter la profondeur P. A l'inverse, afin de diminuer la rigidité, on cherchera à obtenir des angles α et β supérieurs à 90°, et/ou à augmenter la largeur L, et/ou à diminuer la profondeur P.

La rigidité de chaque cavité sera en outre modifiée par la proximité de liaison ou points de contact entre la doublure et le capot ou entre le capot et le véhicule (appuis du capot sur le véhicule directement ou par l'intermédiaire d'éléments de type butées, renfort appliqué au niveau de la gâche, ...). Dans ces zones, le besoin de rigidité des cavités est moins élevé en raison de la présence de ces liaisons ou points de contact qui renforcent localement la rigidité du capot, de sorte que des cavités moins profondes et plus ouvertes peuvent être réalisées. Bien entendu les dimensions et l'ouverture des cavités peuvent varier suivant leur direction longitudinale afin d'adapter la rigidité de la cavité.

## Revendications

1. Capot (1) de véhicule automobile formé d'une peau (2) destinée à être visible et d'une doublure (3) assemblée bord à bord à à peau, la doublure présentant en alternance des cavités (5) et des reliefs (9) allongés et sensiblement parallèles, ces cavités (5), dont la concavité est dirigée vers la peau, étant réparties sur sensiblement toute la surface du capot, chaque cavité étant formée de deux parois latérales (6, 7) sensiblement planes reliées chacune à une paroi de fond (8) sensiblement plane, avec un angle (α, β) entre la paroi de fond et chaque paroi latérale et des angles (α', β') entre la surface de ce relief (9) et les parois latérales adjacentes des cavités, **caractérisé en ce que**, pour au moins un relief, les angles (α', β') entre la surface de ce relief (9) et les parois latérales adjacentes des cavités, sont différents des angles (α, β) d'au moins une cavité.

2. Capot selon la revendication 1, **caractérisé en ce que** chaque relief (9) est formé d'une surface sensiblement plane reliant les parois latérales adjacentes des deux cavités (5) voisines.

3. Capot selon la revendication 1 ou 2, **caractérisé en ce que** l'angle (α, β) entre la paroi de fond et chaque paroi latérale ainsi que les dimensions (L, P) chaque cavité sont déterminés de sorte que le critère HIC du capot respecte la valeur normalisée pour un type d'impact, et **en ce que**, lors de cet impact, la descente du capot, et/ou de la doublure, soit minimale.

4. Capot selon l'une des revendications 1 à 3, **caractérisé en ce que** l'angle (α, β) entre la paroi de fond et chaque paroi latérale de chaque cavité de la doublure est supérieur ou égal à environ 90°.

5. Capot selon l'une des revendications 3 ou 4, **caractérisé en ce que**, pour au moins un relief, les angles (α', β') entre la surface de ce relief (9) et les parois latérales adjacentes des cavités, sont identiques aux angles (α, β) d'au moins une cavité.

6. Capot selon l'une des revendications 1 à 5, **caractérisé en ce que** les cavités de la doublure sont orientées de manière à ce que leur plus grande longueur soit sensiblement parallèle à la direction longitudinale du véhicule auquel est destiné le capot, lorsque le capot est monté sur le véhicule.

## Claims

1. Motor vehicle hood (1) formed partly of a skin (2) intended to be visible and partly of a lining (3) assembled edge-to-edge to the skin, the lining having approximately parallel elongate alternating cavities (5) and reliefs (9), these cavities (5), whose concavity is turned towards the skin, being distributed over most of the hood surface area, each cavity being formed of two approximately planar side walls (6, 7), each connected to an approximately planar bottom wall (8), with an angle (α, β) between the bottom wall and each side wall and angles (α', β') between the surface of this relief (9) and the adjacent side walls of the cavities, **characterized in that**, in the case of at least one relief, the angles (α', β') between the surface of this relief (9) and the adjacent side walls of the cavities are different from the angles (α, β) of at least one cavity.

2. Hood according to Claim 1, **characterized in that** each relief (9) is formed of an approximately planar surface connecting the adjacent side walls of two neighbouring cavities (5).

3. Hood according to Claim 1 or 2, **characterized in that** the angle (α, β) between the bottom wall and each side wall, and the dimensions (L, P) of each cavity, are determined in such a way that the HIC of the hood meets the standardized value for an impact type, and **in that**, in this impact, the descent of the hood and/or lining is minimal.

4. Hood according to one of Claims 1 to 3, **characterized in that** the angle (α, β) between the bottom wall and each side wall of each lining cavity is greater than or equal to approximately 90°.

5. Hood according to either of Claims 3 and 4, **characterized in that**, in the case of at least one relief, the angles (α', β') between the surface of this relief (9) and the adjacent side walls of the cavities are identical to the angles (α, β) of at least one cavity.

6. Hood according to one of Claims 1 to 5, **characterized in that** the cavities of the lining are oriented in such a way that their greatest length is approximately parallel to the longitudinal direction of the vehicle for which the hood is intended, when the hood is mounted on the vehicle.

## Patentansprüche

1. Kraftfahrzeugmotorhaube (1), die aus einer Haut (2), die sichtbar sein soll, und einer Auskleidung (3) gebildet ist, die auf Stoß mit der Haut angeordnet ist und abwechselnd längliche und im Wesentlichen parallel verlaufende Vertiefungen (5) und Erhöhungen (9) aufweist, wobei diese Vertiefungen (5), deren Konkavität zur Haut hin gerichtet ist, über im Wesentlichen die ganze Oberfläche der Motorhaube verteilt und jeweils aus zwei im Wesentlichen ebenen Seitenwänden (6, 7) gebildet sind, die jeweils mit einer im Wesentlichen ebenen Bodenwand (8) verbunden sind, mit einem Winkel (α, β) zwischen der Bodenwand und jeder Seitenwand und Winkeln (α', β') zwischen der Oberfläche dieser Erhöhung (9) und den angrenzenden Seitenwänden der Vertiefungen, **dadurch gekennzeichnet, dass** sich die Winkel (α', β') zwischen der Oberfläche dieser Erhöhung (9) und den angrenzenden Seitenwänden der Vertiefungen für mindestens eine Erhöhung von den Winkeln (α, β) von mindestens einer Vertiefung unterscheiden.

2. Motorhaube nach Anspruch 1, **dadurch gekennzeichnet, dass** jede Erhöhung (9) aus einer im Wesentlichen ebenen Fläche gebildet ist, die die angrenzenden Seitenwände der beiden benachbarten Vertiefungen (5) verbindet.

3. Motorhaube nach Anspruch 1 oder 2, **dadurch gekennzeichnet, dass** der Winkel (α, β) zwischen der Bodenwand und jeder Seitenwand sowie die Abmessungen (L, P) jeder Vertiefung so bestimmt werden, dass beim HIC-Wert der Motorhaube der genormte Wert für eine Aufprallart eingehalten wird und dass das Absenken der Motorhaube und/oder der Auskleidung bei diesem Aufprall minimal ist.

4. Motorhaube nach einem der Ansprüche 1 bis 3, **dadurch gekennzeichnet, dass** der Winkel (α, β) zwischen der Bodenwand und jeder Seitenwand jeder Vertiefung der Auskleidung größer-gleich ungefähr 90° ist.

5. Motorhaube nach Anspruch 3 oder 4, **dadurch gekennzeichnet, dass** für mindestens eine Erhöhung die Winkel (α', β') zwischen der Oberfläche dieser Erhöhung (9) und den angrenzenden Seitenwänden der Vertiefungen mit den Winkeln (α, β) mindestens einer Vertiefung identisch sind.

6. Motorhaube nach einem der Ansprüche 1 bis 5, **dadurch gekennzeichnet, dass** die Vertiefungen der Auskleidung so ausgerichtet sind, dass ihre längste Länge im Wesentlichen parallel zu der Längsrichtung des Fahrzeugs verläuft, für das die Motorhaube bestimmt ist, wenn die Motorhaube an dem Fahrzeug montiert ist.
